# EUROPEAN PATENT APPLICATION

(11) **EP 1 416 300 A2**
(43) Date of publication of application: **06.05.2004**
(21) Application number: 03078184.3
(22) Date of filing: 08.10.2003
(51) Int. Cl.: G01V 3/08

(54) **System for detecting a magnet**

(30) Priority: 17.10.2002 NL 1021686
(71) Applicant: Siersema, Klaas, 7841 EP Sleen (NL)
(72) Inventor: Siersema, Klaas, 7841 EP Sleen (NL)

(57) **Abstract**

The invention relates to a system for detecting the presence of strong magnets. For that purpose, the system is provided with detector units (1), in which building blocks (4a,4b,4c,4d) are placed with detectors sensitive to a magnetic field and with indicators, which may indicate the presence of a strong magnetic field. If desired, also the height of the magnet and the orientation of the magnetic field can be indicated.

## Description

The invention relates to a system for detecting a magnet, comprising at least one detector unit provided with at least one detector for detecting magnetic fields and at least one monitor unit. The purpose of the invention is to find out if persons possibly carry strong magnets with them, obviously with the intention to cause damage. In that respect one must consider that small, portable magnets become increasingly more powerful, because of new materials that have become available, while the number of applications for which a strong magnet may cause harm is increasing. More specifically, the invention aims at preventing antitheft tags, connected to goods in a shop or in a public place and operating according to a magnetic principle, being made ineffective. Once it is detected that a person carries a strong magnet, this person can be kept an eye on and possibly this person can be caught in the act.

The invention is characterised in that the at least one detector unit is provided with a transmitter for transmitting a detection signal when a magnet is detected in a vicinity of a detector unit and that the monitor unit is provided with a receiver and indicator means for giving an indication that the detector has detected a magnet.

A detector unit may be placed onto or next to doors, in or on the floor, in or on the ceiling or free in space, as long as visitors, entering a room to be protected must pass the detector unit as nearby as possible.

A favourable embodiment of the invention is characterised in that the detector unit is implemented as a detector pole. The detector pole can be placed at strategic positions and the detector can easily be positioned at such a height that magnets, placed inside bags or pockets will be certainly detected.

A favourable embodiment according to a further aspect of the invention, which increases significantly the probability of detection, is characterised in that the system comprises several detector units, which are operationally placed inside a shop or a public space.

A embodiment which can be used advantageously when the system comprises several detector units is characterised in that each detector unit is provided with a transmitter for transmitting a detector unit identification number together with a detection signal.

A further favourable embodiment is characterised in that the system comprises several receivers, each arranged for receiving and indicating a detection signal together with a detector unit identification signal as transmitted by a detector unit, so that several supervisors may use the available information.

A further favourable embodiment of the inventive system is characterised in that a detector unit is provided with several detectors, mounted on different heights and that the detector unit transmits a height indication signal together with a detection signal. A height indication is useful for the supervisors, because it gives information about the place where a powerful magnet may be hidden, but it may also help recognising false indications, caused for example by a headphone of a visitor.

A further favourable embodiment of the invention is characterised in that each detector comprises two or three mutually perpendicularly positioned subdetectors. When two subdetectors are used, the strength of a combined detection signal will be less dependent upon the orientation of the detector unit with respect to a magnetic field, while when three subdetectors are used this strength will not depend upon this orientation at all, which means that the strength of the magnet can be better estimated and false alarms can be prevented.

A further favourable embodiment is characterised in that the detector unit transmits a direction indication signal together with a detection signal, based upon the mutual ratio of the detection signals as produced by the two or three subdetectors. The direction indication signal gives information about the orientation of the magnet carried by the visitor and it will rapidly change when the visitor comes into action.

A further favourable embodiment is characterised in that a detector unit is provided with a processor for processing the signals, delivered by the several detectors, before they are being transmitted as a detection signal. Preferably, the processor is arranged for selecting a strongest signal when several detectors or subdetectors detect simultaneously a signal and for processing this signal to a detection signal to be transmitted together with a height indication signal and/or a direction indication signal.

A further favourable embodiment which is especially important for example for department stores, in which a central control room is available, is characterised in that the system moreover comprises a computer, provided with a receiver and with a display unit for displaying an environment of the detector units together with the received detection signals. The supervisory staff may track a person carrying a strong magnet from this control room, for example by surveillance cameras and take action if necessary.

The invention also relates to a system as described in the above, where the detector unit and the monitor unit are housed in a common housing, so that supervisory staff can see immediately where a strong magnet has been detected.

The invention also relates to a system for detecting antitheft tags, as such well known in the art, provided with at least one detection device, which tags may be made useless or may be removed from an article with the aid of a strong magnet. The system according to the invention is characterised in that the detection device is moreover provided with at least one detector for detecting a magnet. In this way, it becomes possible to monitor an entrance of a shop with for example one security gate, detecting both labels and strong magnets.

A favourable embodiment of the system is characterised in that the detection device is moreover provided with a transmitter for transmitting a detection signal when the detector has detected a magnet. Preferably, the system is also provided with a receiver and indicator means for providing an indication when at least one detector has detected a magnet, for warning the supervisory staff.

The invention will now be further explained with a reference to the following figures, in which:
- Fig. 1: represents a possible embodiment of a detector unit according to the invention;
- Fig. 2A: represents a possible embodiment of a building block provided with one detector;
- Fig. 2B: represents an alternative embodiment of a building block provided with three mutually perpendicularly placed detectors;
- Fig. 2C: represents a possible embodiment of a building block provided with a processor and a transmitter;
- Fig. 3A: represents a possible embodiment of a monitor unit;
- Fig. 3B: represents an alternative embodiment of a monitor unit;
- Fig. 4: represents a security gate for detecting labels, provided with a detector unit according to the invention.

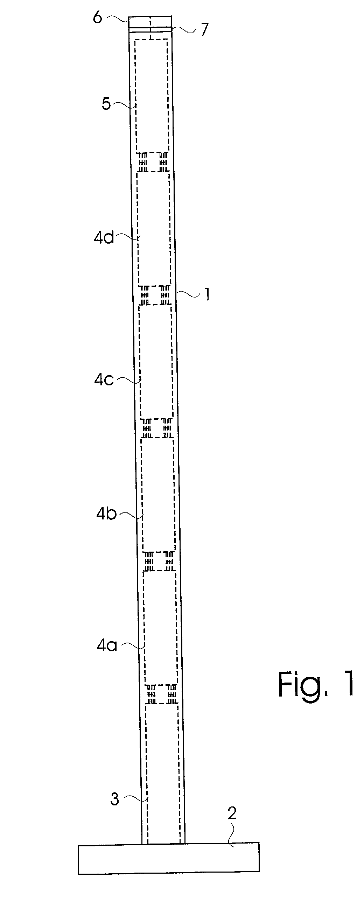

Fig. 1 represents a possible embodiment of a detector unit according to the invention, here designed as detector pole, consisting of for example an aluminium tube 1, placed into a stable base 2. In tube 1, a supply module 3 is placed which is connected to the mains supply and for example four building blocks 4a,4b,4c,4d, each containing at least one detector with which a magnetic field can be detected. Moreover, a building block 5 is placed in tube 1 containing a processor and a transmitter. On its top side, tube 1 is closed with a removable metal cover 6 which is separated from tube 1 by an insulating layer 7 and which may act as an antenna for the transmitter if the transmitter operates on the basis of RF signals. Via the top side of tube 1, the building blocks may be tested and if necessary exchanged and for example the sensitivity of the detectors may be adjusted. In situations where no mains supply is available, supply module 3 can easily be replaced by a battery module, because the power consumption of the detector pole is very low. In the embodiment shown here, the transmitter emits RF signals, but obviously the transmitter may be designed so that signals can be sent via wires or as optical signals.

The detector pole is placed for example near the entrance of a public library, of which the books are protected against theft by magnetisable elements, placed inside the backs. It is possible for a visitor to change the properties of the magnetisable element with the aid of a strong magnet and subsequently to carry off the book unnoticed through a security gate, placed at the exit. The detector pole placed near the entrance detects with the aid of the detectors mounted on the building blocks 4a,4b,4c,4d that a visitor carries a strong magnet and sends a warning to the supervisory staff. Furthermore, one may determine which detector outputs the strongest signal level, which is an indication of the height where the magnet is located. The warning signal is emitted by a transmitter which is situated in building block 5, which is controlled by a processor which is also positioned in building block 5 and which receives the output signals of the four detectors.

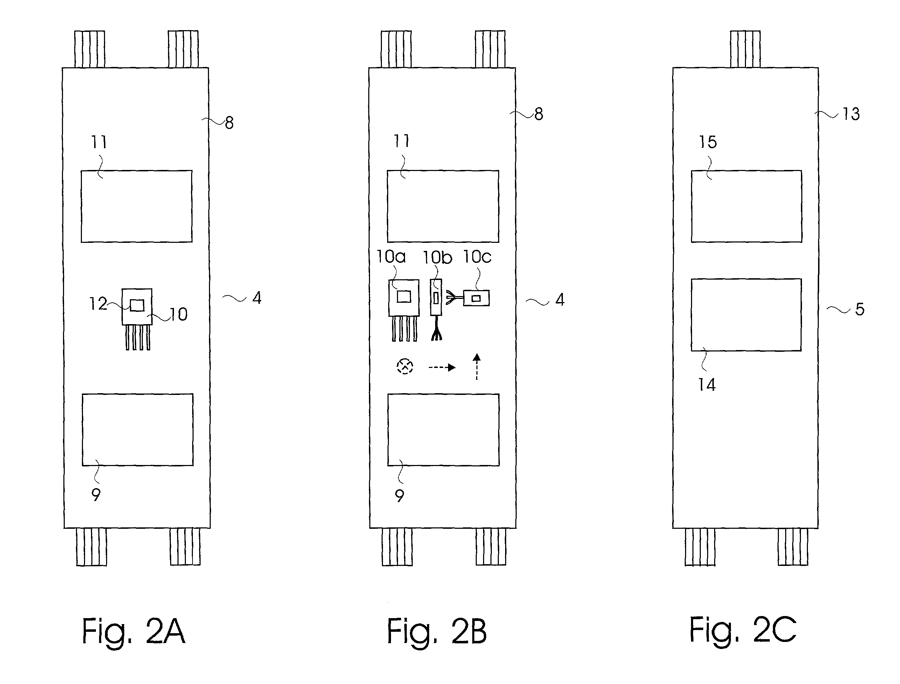

Fig. 2A represents a possible embodiment of a building block 4 provided with one detector, consisting of a printed circuit board 8, on the bottom side and on the top side provided with connectors, in such a way that a number of building blocks can be connected together, in which case the connectors are used for distributing supply voltages, for directing detector signals towards the processor on building block 5 and possibly for directing control signals from the processor on building block 5. Printed circuit board 8 comprises a supply part 9 which generates a control current for detector 10 of the hall element type and an amplifier part 11 for amplifying an output voltage of the hall element and for converting it to a detection signal, in a way well known in the art. The output voltage is a measure for the strength of the magnetic field in a direction perpendicular to a semiconductor slab 12 in hall element 10. Hall element 10 may, if desired, be replaced by an alternative magnetic sensor, for example based upon the magnetoresistive principle, in which case supply part 9 and amplifier part 11 must be adapted.

Fig. 2B represents an alternative embodiment of a building block 4 provided with three mutually perpendicularly placed detectors 10a,10b,10c, which operate in combination with supply part 9 and amplifier part 11 completely analogously to the embodiment as disclosed with a reference to Fig. 2A and which produce each, individually a detection signal. Of these three detection signals, the strongest may be transmitted but it is also possible to transmit a combined signal, in such a way that the magnetic field strength is available as a vector.

Fig. 2C represents a possible embodiment of a building block 5, consisting of a printed circuit board 13, on the bottom side provided with connectors with which a connection may be made with other building blocks and on the top side provided with connectors for connecting it to an antenna and for connecting it to test equipment. Printed circuit board 13 is provided with a processor 14 and a transmitter 15. Processor 14 is provided with a multiplexer, via which the signals of all the detectors of the detector pole can be measured one by one. The internal program of processor 14 may decide, if a criterium is met, that transmitter 15 must transmit a detection signal, together with a hight indication signal and a detector pole indication signal in a manner known as such.

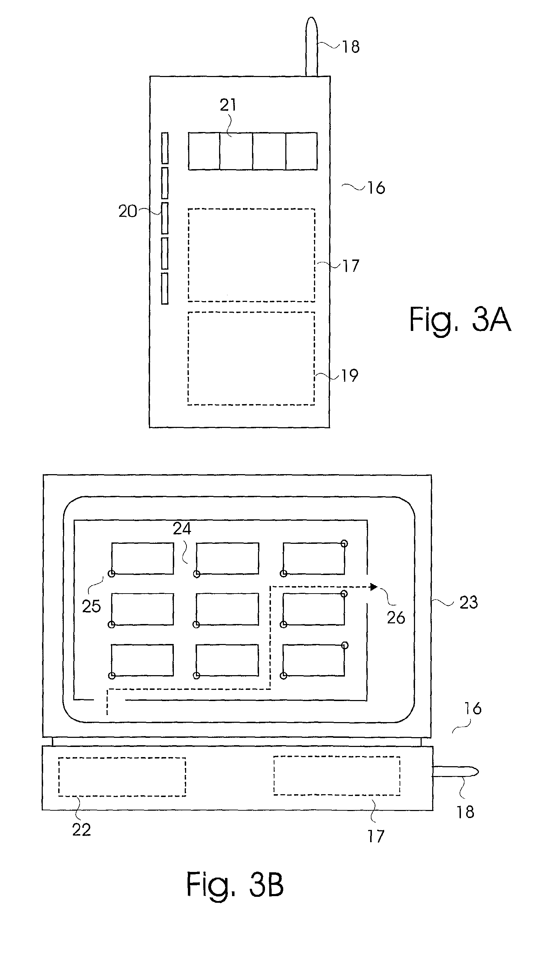

Fig. 3A represents a possible embodiment of a monitor unit 16, provided with a receiver 17, coupled to an antenna 18 and a processor 19 which derives information from the received detection signal in a manner known as such and which visualises this information, for the embodiment shown here with the aid of a row of LED's 20 for the height indication and a display 21 for the pole indication.

Fig. 3B represents an alternative embodiment of a monitor unit 16, provided with a receiver 17, coupled to an antenna 18 and a processor 22, here a PC, coupled to a monitor 23. On monitor 23 a floor plan 24 is displayed of the area to be protected, in this case a library, in which bookshelves are placed of which always one stand 25 in fact consists of a detector pole according to the invention. If a visitor, carrying a strong magnet, enters the protected area then the various stands 25 will generate detection signals and his route 26 can easily be watched by the supervisory staff. While on his route, the measured magnetic field will change in a predictable manner, taking into account that the magnet has been put away safely. As soon as the visitor comes into action, this will be accompanied by strong changes in the magnetic field strengths, which will normally be visible on the monitor.

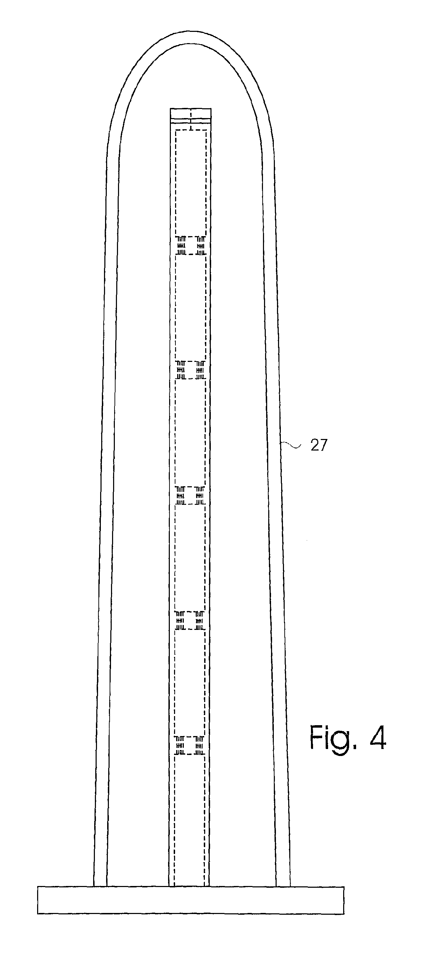

Fig. 4 represents a security gate 27 for detecting labels according to the state of the art, provided with a detector unit according to the invention. Because security gate 27 operates on a base of electromagnetic radiation and the detector unit on a base of substantially static magnetic fields, both detectors can be combined without any problem, for detecting labels and strong magnets simultaneously. Usually a lamp is switched on when a label has been detected. Upon the detection of a magnet, preferably a silent alarm is generated, because no theft or other offence has been committed yet.

## Claims

1. System for detecting a magnet, comprising at least one detector unit provided with at least one detector for detecting magnetic fields and at least one monitor unit, **characterised in that** the at least one detector unit is provided with a transmitter for transmitting a detection signal when a magnet is detected in a vicinity of a detector unit and that the monitor unit is provided with a receiver and indicator means for giving an indication that the detector has detected a magnet.

2. System according to claim 1, **characterised in that** the detector unit is implemented as a detector pole.

3. System according to claim 1 or 2, **characterised in that** the system comprises several detector units, which are operationally placed inside a shop or a public space.

4. System according to claim 3, **characterised in that** each detector unit is provided with a transmitter for transmitting a detector unit identification number together with a detection signal.

5. System according to claim 3 or 4, **characterised in that** the system comprises several receivers, each arranged for receiving and indicating a detection signal together with a detector unit identification signal as transmitted by a detector unit.

6. System according to one of the previous claims, **characterised in that** a detector unit is provided with several detectors, mounted on different heights and that the detector unit transmits a height indication signal together with a detection signal.

7. System according to one of the previous claims, **characterised in that** each detector comprises two or three mutually perpendicularly positioned subdetectors.

8. System according to claim 7, **characterised in that** the detector unit transmits a direction indication signal together with a detection signal.

9. System according to claim 6,7 or 8, **characterised in that** a detector unit is provided with a processor for processing the signals, delivered by the several detectors.

10. System according to claim 9, **characterised in that** the processor is arranged for selecting a strongest signal when several detectors or subdetectors detect simultaneously a signal and for processing this signal to a detection signal to be transmitted together with a height indication signal and/or a direction indication signal.

11. System according to claim 10, **characterised in that** the system moreover comprises a computer, provided with a receiver and with a display unit for displaying an environment of the detector units together with the received detection signals.

12. Detector unit, suitable for use in a system according to one of the claims 1 t/m 11.

13. Monitor unit, suitable for use in a system according to one of the claims 1 t/m 11.

14. System according to one of the claims 1 t/m 11, **characterised in that** the detector unit and the monitor unit are housed in a common housing.

15. System for detecting antitheft tags, provided with at least one detection device, **characterised in that** the detection device is moreover provided with at least one detector for detecting a magnet.

16. System according to claim 15, **characterised in that** the detection device is moreover provided with a transmitter for transmitting a detection signal when the detector has detected a magnet.

17. System according to claim 16, **characterised in that** the system is moreover provided with a receiver and indicator means for providing an indication when at least one detector has detected a magnet.
